# EUROPEAN PATENT SPECIFICATION

(11) **EP 2 013 536 B1**
(45) Date of publication and mention of the grant of the patent: **02.09.2009**
(21) Application number: 07735504.8
(22) Date of filing: 16.04.2007
(51) Int. Cl.: F21S 8/10, F21V 14/00

(54) **LAMP UNIT FOR AN ADAPTIVE FRONT LIGHTING SYSTEM FOR A VEHICLE**
LAMPENEINHEIT FÜR ADAPTIVES FRONTBELEUCHTUNGSSYSTEM FÜR EIN FAHRZEUG
UNITÉ DE LAMPE POUR UN SYSTÈME D'ÉCLAIRAGE AVANT ADAPTABLE POUR UN VÉHICULE

(30) Priority: 21.04.2006 EP 06112910
(43) Date of publication of application: 14.01.2009
(73) Proprietor: Koninklijke Philips Electronics N.V., 5621 BA Eindhoven (NL); Philips Intellectual Property & Standards GmbH, 20099 Hamburg (DE)
(72) Inventor: HIKMET, Rifat, A.M., 5656 AA Eindhoven (NL); KRAUS, Albrecht, 5656 AA Eindhoven (NL); SCHLAGER, Walter, A., 5656 AA Eindhoven (NL); SPINGER, Benno, 5656 AA Eindhoven (NL); ANSEMS, Johannes, P.M., 5656 AA Eindhoven (NL); LENDERINK, Egbert, 5656 AA Eindhoven (NL); VAN BOMMEL, Ties, 5656 AA Eindhoven (NL)
(74) Representative: Bekkers, Joost J.J
(86) International application number: PCT/IB2007/051355
(87) International publication number: WO 2007/122544

(56) References cited:
- EP-A1- 0 206 908
- DE-A1- 10 233 719
- DE-A1- 19 910 004
- DE-A1-102005 019 811
- FR-A1- 2 590 965
- FR-A1- 2 605 086
- GB-A- 2 211 923

## Description

The present invention relates to a lamp unit for an adaptive front lighting system (AFS) for a vehicle. The present invention also relates to an AFS comprising such a lamp unit, and a vehicle comprising such an AFS. See DE 102 005 019 811 for an example of a LCD combined with a LED element.

Currently, vehicles have a low beam and a high beam and some have a pair of fog lights to cope with the adverse driving conditions in fog. However, different environmental demands are underlined by the expressed need for special lights during the daytime and during driving in built up areas with public lighting. In urban areas with their many crossings, the present asymmetrical main beam is counterproductive, especially as additional glare is produced during acceleration after stops. Driving on highways at a higher speed with the oncoming traffic on a separate carriageway requires other lighting functions. Adverse weather conditions have other impacts owing to road reflection, resulting in reduced luminosity and higher (reflected) glare. When it is snowing, raining or foggy, the emitted light is absorbed and scattered by snowflakes or water droplets, and vision is veiled by the reflected light, resulting in a shortened visual range. It is for this reason that legislation is in preparation for the introduction of adaptive front lighting systems (AFS).

An AFS is a system in which a vehicle headlamp can selectively alter the projected beam pattern to anticipate the direction of the vehicle. The AFS contrasts with a fixed headlamp system, in which the headlamp is operable only to project light in a forward direction. The AFS is useful to the driver, as it changes the beam pattern with road conditions and vehicle motion, to continually project light onto the roadway ahead of the vehicle, regardless of whether the vehicle is turning or is traveling up or down a sloping road. Consequently, the driver will have a greater awareness of the road ahead, and may thus be able to anticipate obstacles or other problems in the upcoming roadway more accurately. By tilting the beam pattern either up or down, the AFS is able to project light over a constant distance in front of the vehicle, even while the vehicle chassis pitch varies relative to the suspension. The AFS is further able to follow the upcoming roadway continually while a vehicle is turning. Thus, the headlamp illuminates the roadway where the driver needs to see.

An adaptive front light system for use in a vehicle is disclosed in US 6,623,147. The disclosed AFS comprises optical axis adjustment means, for example a leveling mechanism constituted by an electric motor, for tilting the lamp in vertically upward and downward directions in dependence on a control signal. However, mechanical movements are prone to failure, have a short lifetime, and are costly to manufacture and install. Furthermore, a significant amount of electricity is required for the mechanical movements, increasing the cost for controlling the AFS.

There is accordingly a need for an improved adaptive front lighting system that substantially overcomes at least some of the disadvantages of the prior art, and more specifically overcomes the problems with short lifetimes owing to mechanical failure in currently known adaptive front lighting systems.

The above object is met by a lamp unit for an adaptive front lighting system for a vehicle as defined in claim 1. The appended sub-claims define advantageous embodiments in accordance with the present invention.

According to an aspect of the invention, there is provided a lamp unit for an adaptive front lighting system for a vehicle, comprising a first liquid crystal element arranged to receive light emitted by a light source, which liquid crystal element has a first state in which it is adapted to transmit incoming light without substantially refracting said incoming light, and a second state in which it is adapted to refract said incoming light when the light passes through said liquid crystal element, wherein the liquid crystal element is controlled in dependence on a signal received from the adaptive front lighting system, wherein the lamp unit further comprising at least a second liquid crystal element arranged to receive light emitted by the first liquid crystal element, wherein one of the first and the second liquid crystal elements in said second state is adapted to alter the direction of said incoming light when it passes through that liquid crystal element, and the other one of the first and the second liquid crystal elements in said second state is adapted to alter the distribution of said incoming light when it passes through that liquid crystal element.

According to the present invention, when the liquid crystal element enters the second state, the light emitted by the light source is refracted, so that the shape of the beam emitted from the lamp unit can be adapted in dependence on the ambient lighting conditions (daylight, dawn, public lighting, night), traffic environment (motorways with separate carriageways, winding country roads, town streets), weather conditions (dry, wet, rainy, snowy, foggy), and vehicle orientations (inclination changes caused by load, dynamic inclination changes while driving, degree of control speed of vehicle, ground clearance). It is further possible to adapt the beam shape so as to prevent dazzling of oncoming vehicles, thus improving traffic safety.

A substantial improvement is achieved with a lamp unit for an AFS according to the present invention as a liquid crystal element is used to refract the light emitted by the light source, thereby replacing the need for mechanical movements. Such a lamp unit is less costly to manufacture, easier to install and maintain, has a longer expected lifetime, and will require less electric power than currently known lamp units for an AFS using mechanical movements.

The liquid crystal element in the second state may be adapted, for example, to alter the direction of light from the light source, such as tilting the light, or alter the distribution of light from the light source, such as widening the light beam.

In one embodiment of the present invention, the liquid crystal element comprises a surface relief structure, such that the liquid crystal element in the second state alters the direction and/or the distribution of the incoming light when it passes through the liquid crystal element. This is based on the refraction of light at the interface between liquid crystal and the solid structure. The main advantage of this type of component is that one can design any refracting structure to perform a particular function and place it in an LC cell/element, where it can be switched between various states. For example, the surface relief structure may have a linear grating structure with at least one of triangular, rectangular, circular, and elliptical cross-sections. For instance, if a triangular grating structure is used, a change in the voltage applied across such an element can achieve a tilting effect, e.g. adjust the axis of the light in a vertical direction, so that the light emitted by the light source hits the road in front of the vehicle at a distance from the vehicle that depends on the tilt angle. If the beam in the second state is tilted downwards towards the road, compared with the first state wherein the beam is pointed in a more upward direction, an effect is achieved where more of the shoulders of the roads are lit up. This effect is preferred when driving in, for example, a built-up area. In comparison, when driving on a highway, it is preferred to light up the road with a narrower beam projected at a longer distance from the vehicle. The effect of tilting of the light beam is furthermore advantageous as it will prevent dazzling of oncoming vehicles. Those skilled in the art will realize that it is also possible to adjust the axis of the light in a horizontal direction, making the light beam "turn" along with the vehicle when the vehicle enters a bend in the road. In another example, when a cylindrical or an elliptical cross-sectional structure (or a combination of these two) is used, the distribution of the incoming light can be altered when it passes through the liquid crystal element. Such structures capable of changing the distribution of light in one direction, e.g. broadening it, are important as they do not cause a change in the intensity distribution in other directions, so that glare requirements laid down by traffic regulations are satisfied. Changing the voltage applied across the LC element renders it possible to achieve a broadening effect of the emitted light beam, thus causing, for example, more of the shoulders of the road to light up while at the same time the beam is focused relatively far ahead of the vehicle. This broadening effect is advantageous when driving the vehicle in a country environment.

In another embodiment of the present invention, the liquid crystal element is an anisotropically scattering element which can be used to alter the distribution of the incoming light. In yet another embodiment of the present invention, the liquid crystal element is a GRIN optical element. The GRIN optical element preferably comprises linear electrodes on both of its surfaces for applying an electric field across the GRIN optical element. In an alternative embodiment, the GRIN optical element comprises interdigitated comb electrodes on at least one of the element surfaces for applying an electric field across the liquid crystal.

The lamp unit may further comprise at least one additional liquid crystal element of any type described above. For example, a plurality of similar liquid crystal elements may be arranged side by side in an array. Furthermore, liquid crystal elements with different structures, such as one comprising a triangular grating structure and one comprising a cylindrical lens structure, may be combined. Such a configuration it renders it possible to achieve both effects described above: tilting and broadening.

To achieve a high energy efficiency, the light source may comprise one or more light-emitting diodes (LEDs), inorganic LEDs, high-intensity discharge lamps, or plasma lamps. LEDs, for example, have much higher energy efficiency than conventional light bulbs, which generally deliver at best about 6% of the electric power consumed by them in the form of light. Those skilled in the art will appreciate that it is obviously possible to use a standard incandescent light source, such as an argon, krypton, and/or xenon light source.

The invention is best suited for use together with LEDs, since LEDs emit "cold" radiation, i.e. no infrared radiation. If other lamp technologies mentioned above are used, care must be taken to filter the infrared radiation from their spectrum in order to avoid overheating of the GRIN optical element or of the liquid crystal element.

The lamp unit is advantageously further provided with a projection lens, which lens preferably is in direct optical contact with the liquid crystal element.

According to another aspect of the invention, there is provided an adaptive front lighting system for a vehicle, comprising a lamp unit according to the above description, and a control unit adapted to apply the switching voltage to the liquid crystal element(s). An AC voltage is preferably used in order to avoid charge build up. The frequency is preferably 100 Hz to 1 kHz. The control unit preferably includes a variable voltage source for controlling the applied voltage, and the voltage is applied across the liquid crystal by means of at least two electrodes of the liquid crystal element. These electrodes may further be segmented.

Furthermore, the AFS may comprise a sensor for providing a signal indicating a state of the vehicle, the control unit being adapted to receive said signal and to apply the switching voltage to the liquid crystal element(s) in dependence on the received signal. Such a sensor may be selected from a group comprising a steering wheel angle sensor, a sensor for the speed of said vehicle, a road bend sensor, a radial force sensor, an incline sensor, a GPS-sensor, a light sensor, and a weather sensor. It is possible to identify in advance the bends which are going to appear in the road at a given distance by using a sensor as described above or a navigation system present in a vehicle with an associated mapping system with the indications given by the GPS-sensor, and thus to anticipate the illumination of the road. Furthermore, for example, the data produced by an incline sensor may be used to compensate for acceleration/retardation of the vehicle, which may cause the light beam to dazzle oncoming traffic.

According to yet another aspect of the invention, there is provided a vehicle comprising an adaptive front light system according to the above description. Such a vehicle may be, for example, an automobile, a truck, a motorcycle, a train, a bicycle, and so on. Further features and advantages of the present invention will become apparent from the appended claims and the following description. Those skilled in the art will realize that different features of the present invention can be combined to create embodiments other than those described in the following.

These and other aspects of the present invention will now be described in more detail, with reference to the appended drawings showing currently preferred embodiments of the invention, in which
Figs. 1a - 1c illustrates a car illuminating a road with three different light beam patterns;
Figs. 2a - 2b illustrate configurations of two different liquid crystal elements according to embodiments of the present invention;
Figs. 3a - 3c illustrate a liquid crystalline refractive index gradient (GRIN) element according to another embodiment of the present invention;
Figs. 4a - 4b illustrate an anisotropic scattering element according to yet another embodiment of the present invention;
Fig. 5 is a block diagram of an adaptive front lighting system for a vehicle, arranged in accordance with a currently preferred embodiment of the present invention; and
Fig. 6 illustrates a lamp unit comprising a projection lens according to an embodiment of the present invention.

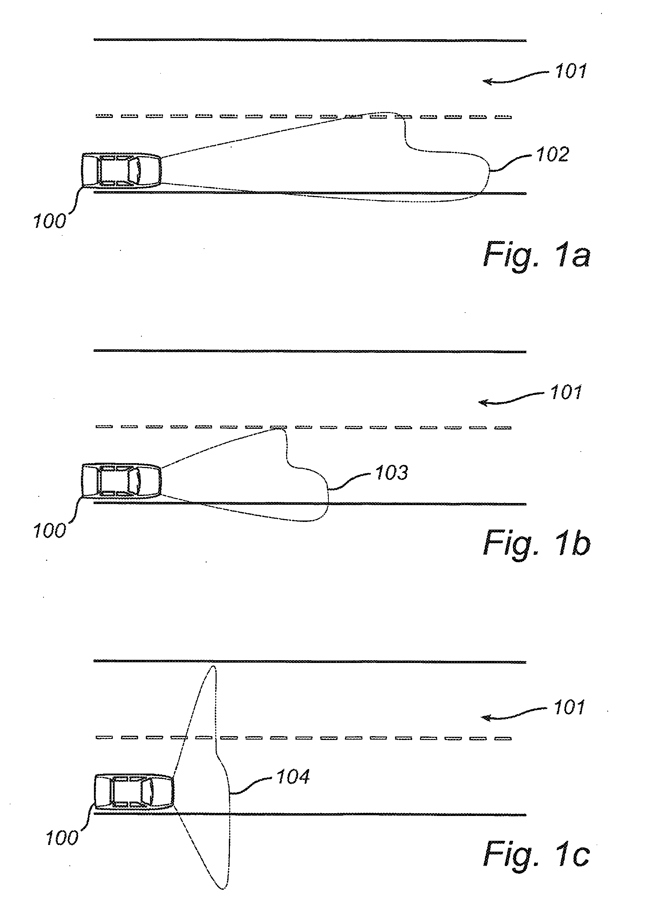

Referring now to the drawing and to Figs. 1a - 1c in particular, there is depicted a vehicle 100 illumination a road 101. As shown in Figure 1a, the headlight of the vehicle 100 is arranged to illuminate the road 101 in a highway light beam pattern 102. The highway light beam pattern 102 is preferably used when traveling with the vehicle 100 along the road 101, for example a highway, at a relatively high speed. In this case, the optical axis of the light emitted from the headlight of the vehicle 100 is essentially parallel to the road 101. However, when moving into a cross country environment, it is preferred to tilt the optical axis of the headlight of the vehicle 100 downwards towards the road 101, thereby obtaining a cross country light beam pattern 103. The cross country light beam pattern 103 will prevent dazzling of oncoming vehicles and is preferably used when traveling at a medium speed. In Fig. 1c, the light beam pattern has been adapted for town lighting conditions. The optical axis of the headlight of the vehicle 100 has been tilted further downwards, and the emitted light has also been broadened, thereby obtaining a town light beam pattern 104. The town light beam pattern 104 is preferably used when traveling at a relatively low speed. The town light beam pattern 104 will increase the illumination of the shoulders of the road 101, increasing traffic safety in relation to, for example, pedestrians and cyclists moving on the side of the road 101.

All the different illumination pattern shown in Figs. 1a - 1c can be accomplished with an adaptive front lighting system (AFS) comprising a light source and a lamp unit with a liquid crystal element according to the present invention.

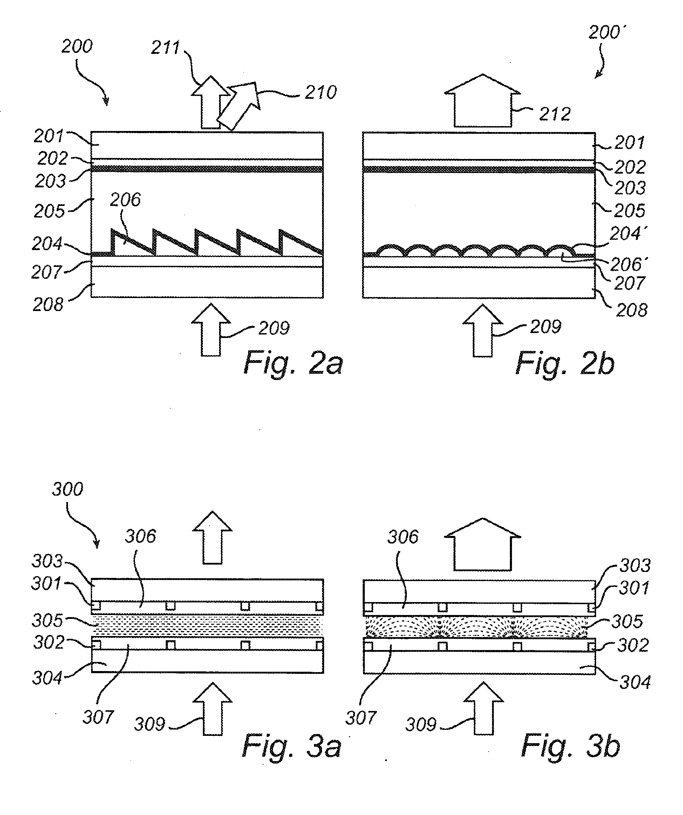

Fig. 2a shows an example of such a liquid crystalline element (LC element) 200 which can introduce an alternation of the direction of light, such as a horizontal or vertical tilt. The LC element 200 can accomplish, for example, the downward tilting effect as shown in Figures 1b and 1c. The LC element 200 comprises a glass substrate 201, a transparent electrode 202, orientation layers 203 and 204, liquid crystalline material 205, a surface relief structure 206, here having a triangular shape, a transparent electrode 207, and a glass substrate 208. When a zero voltage signal or a non-zero voltage signal is supplied to the transparent electrodes 202, 207, the incoming light 209 is refracted 210 or not 211, owing to the fact that the application of an electric field changes the orientation of the liquid crystal molecules, and the light beam can or cannot pass without getting refracted. If both polarization directions need to be effected, two such LC elements 200 need to be used in a configuration in which the orientations of liquid crystal molecules in the LC elements are mutually perpendicular. The orientation direction of the molecules can be kept the same. However, in that case a half-wave plate needs to be inserted between the LC elements 200.

Fig. 2b shows an LC element 200' for altering the distribution of light such as, for example, for broadening the light beam. The broadening effect is used, for example, as described above with reference to Fig. 1c. The LC element 200' is essentially identical to the LC element 200 of Fig. 2a. However, the orientation layer 204 and the surface relief structure 206 of Fig. 2a have been replaced by an orientation layer 204' and a cylindrical lens structure 206'. This arrangement provides the possibility to refract incoming light 209 in a manner similar to that of Fig. 2a, but here by altering the distribution of incoming light 209 so as to achieve a light beam 212 that is broader than the incoming light beam 209. This type of LC element 200' may be used, for example, to achieve the town light beam pattern 104 as shown in Fig. 1 c.

The effect of altering the direction and/or distribution of the incoming light 209 may be achieved, for example, in two different ways. Firstly, for example, if the orientation layer 204/204' is selected from an isotropic material with a refractive index which is almost the same as one of the refractive indices of the liquid crystalline material 205 in the zero voltage state, the LC element 200/200' will act as a lens (i.e. a second state). Upon application of a voltage across the transparent electrodes 202, 207, the molecules in the liquid crystalline material 205 are reoriented, and the lens effect disappears (i.e. a first state).

Secondly, for example, if the structure 206/206' is selected from an anisotropic material with refractive indices almost the same as that of the liquid crystalline material 205 in the zero voltage state, no lens effect is present (i.e. the first state). Upon application of a voltage across the transparent electrodes 202, 207, the molecules of the liquid crystalline material 205 are reoriented, and the LC element 200/200' will act as a lens (i.e. the second state).

Figs. 2a - 2b illustrate a single LC element, but a plurality of such elements may alternatively be used, for example in an array. Figs. 2a - 2b further show two specific structures. It is alternatively possible, however, to use other structures with various cross-sections (e.g. triangular, curved, rectangular, and combinations thereof).

Figs. 3a - 3b illustrate in cross-sectional view another example of an LC element used in the lamp unit of the AFS of the present invention, namely a liquid crystalline gradient refractive index (GRIN) element 300. The GRIN element 300 comprises patterned top and bottom electrodes 301 and 302 arranged on glass substrates 303 and 304, respectively. A liquid crystalline material 305 has been arranged between rubbed polymer layers 306 and 307. The two surfaces of the GRIN element 300 containing patterned electrodes 301, 302 are aligned so as to overlap. When a voltage is applied across the electrodes 301 and 302, electric field lines leak into the LC material 305 below the areas of glass substrates 303 and 304 without electrodes, causing uniform electric field lines in these areas. As a result, LC molecules in the LC material 305 enter varying tilted orientation states in these areas without electrodes. A refractive index gradient is thus formed in the area containing no electrodes. For example, if the transparent electrodes 301, 302 are such that they are in the form of parallel lines on the surface of the glass substrates 303 and 304, the gradient refractive index induced by in the LC material 305 can have the function of cylindrical lenses.

When no voltage is applied between the transparent electrodes 301 and 302 (Figure 3a), the molecules of the liquid crystalline material 305 are oriented uniaxially, there is no lens effect within the GRIN element 300, and the incoming light 309 passes through the GRIN element 300 without being altered.

When a voltage is applied between transparent electrodes 301, 302 (Fig. 3b), however, a reflective index gradient is introduced in the region between the transparent electrodes 301, 302, and the path of the incoming light 309 is altered.

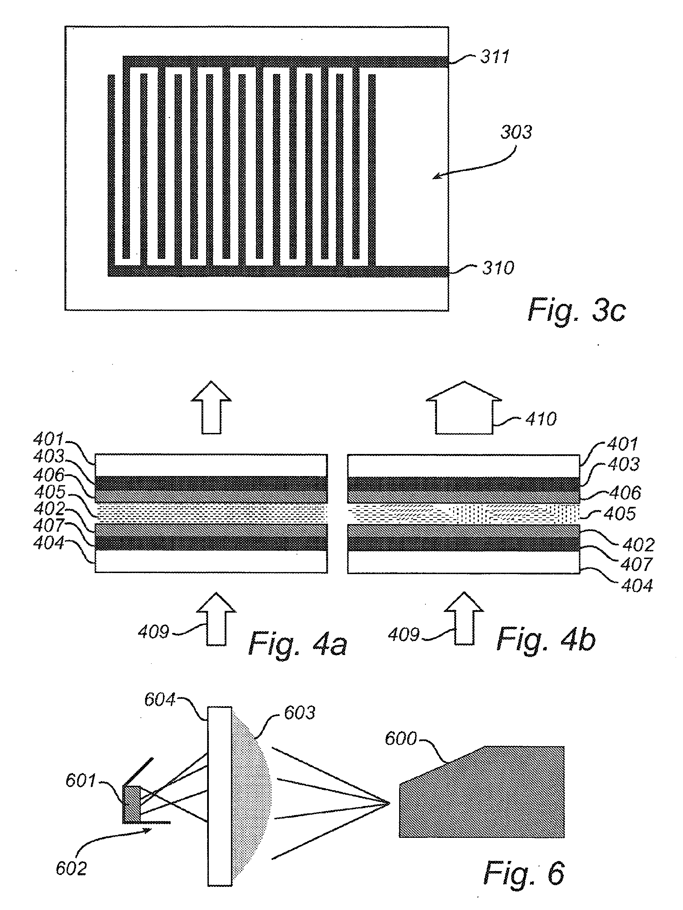

Fig. 3c is a plan view of a GRIN element of another variant. In this variant, electrodes 310, 311 are placed onto only one substrate or surface 303, in an "in-plane switching configuration". The electrodes 310, 310 have a comb structure as illustrated in Fig. 3c. No electrodes are present on the other substrate or surface. Here, the initial orientation of the LC molecules of the LC material may be chosen to be perpendicular to the comb electrodes 310 and 311 or perpendicular to the glass substrate 303 containing the electrodes. The initial orientation of the molecules can be induced by an orientation layer. Such a layer is well known to those skilled in the art. In the electric field off state, the element is transparent and a traversing light beam is not affected. The application of an electric field, however, induces curved electric field lines between the electrodes. In this state a gradient is induced again in the orientation of the LC molecules, leading to the formation of a refractive index gradient.

The use of a GRIN element has a particular advantage in that it has a higher transparency than elements with a fully transparent electrode coverage. The partially transparent coverage as a result of patterned structures enables an increase in the transparency of the GRIN elements.

The patterned electrodes may further be covered by a layer with a very high surface resistance in the megaohm/square range. In such a case, the element may be modeled using parallel capacitors in series with resistors, whereby the LC orientation and hence the refractive index profile across the element can also be adjusted, not only the magnitude of the voltage but also the frequency of the applied voltage.

The GRIN elements 300 in Figs. 3a -3c are shown as polarization-dependent. If both polarization directions need to be affected, two such GRIN elements need to be used in a configuration where the orientations of the liquid crystalline molecules in the GRIN elements are mutually perpendicular. The orientation direction of the molecules can be kept the same in both GRIN elements. In that case, however, a half-wave plate needs to be inserted between the GRIN elements. In yet another embodiment of the present invention, the LC element comprises switchable anisotropically scattering liquid crystalline gel materials as shown in Figs. 4a - 4b. Fig. 4a shows such a material 405 which is transparent without any voltage. In other words, when a zero voltage signal is supplied to transparent electrodes 403 and 407 present on substrates 401 and 404, respectively, the incoming light 409 is not scattered. On the other hand, when a sufficiently high voltage is supplied, the material 405 becomes scattering (Fig. 4b) and scatters light in the direction perpendicular to the orientation of the LC molecules of the LC material. Such a gel material 405 can be obtained from a mixture of LC-containing reactive molecules. The mixture is brought into the element or cell, and a uniaxial orientation is induced by orientation layers 406 and 402. The gel is produced after polymerization of the reactive molecules in the oriented state.

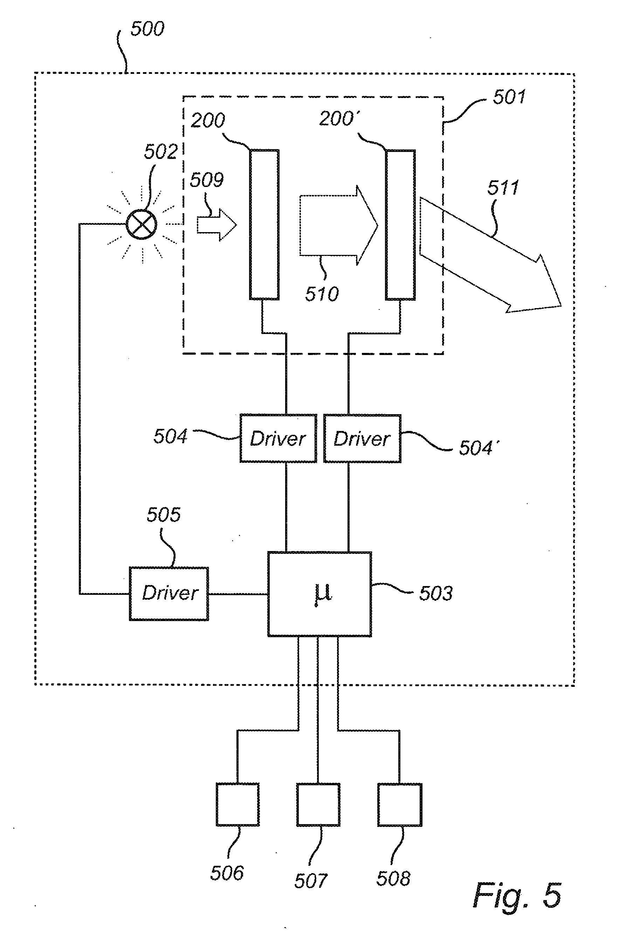

Fig. 5 is a block diagram of an adaptive front lighting system (AFS) 500 for the vehicle 100 in accordance with another aspect of the present invention. The AFS 500 comprises a light source 502, for example an LED, a lamp unit 501 having a first LC element 200 (as illustrated in Fig. 2a), and a second LC element 200' (as illustrated in Fig. 2b). An AFS 500 as illustrated in Fig. 5 is capable of illuminating the road 101 with any of the light beam patterns 102 - 104 as shown in Fig. 1. Fig. 5 shows a case where the AFS 500 has been arranged to illuminate the road 101 with the town light beam pattern 104 from Fig. 1 c.

The AFS 500 further comprises a control unit 503 in electrical communication with two driver circuits 504, 504' for providing a variable voltage to the respective LC elements 200, 200'. A driver circuit 505 is further in electrical communication with the control unit 503 for controlling the light source 502. The control unit 503 is adapted to receive control signals from peripheral sensors, for example an incline sensor 506 and/or a steering wheel angle sensor 507. Those skilled in the art will realize that other sensors may alternatively or additionally be connected to the control unit 503, for example a sensor for the speed of the vehicle 100, a road bend sensor, a radial force sensor, and/or a GPS sensor system. A user interface 508 is connected to the control unit 503 for manual control of the AFS 500.

The user interface 508 may include user input devices, such as buttons and adjustable controls, which produce a signal or voltage to be received by the control unit 503. The voltage may be a digital signal corresponding to a high and a low digital state. If the voltage is in the form of an analog voltage, an analog to digital (A/D) converter may be used to convert the voltage into a useable digital form. The output from the A/D will then supply the control unit 503 with a digital signal. The control unit 503 may include a microprocessor, microcontroller, programmable digital signal processor, or some other programmable device. The control unit 503 may alternatively or additionally include a dedicated integrated circuit, a programmable gate array with programmable array logic, a programmable logic device, or a digital signal processor. If the control unit 503 includes a programmable device such as the microprocessor or microcontroller mentioned above, the processor may further include a computer-executable code that controls the operation of the programmable device.

During operation, the control unit 503 will calculate appropriate light beam patterns to be used to illuminate the road 101 from the signals received from the incline sensor 506 and/or the steering wheel angle sensor 507 and/or positioning information in relation to a roadmap. The control unit 503 will then provide drive signals corresponding to the calculated light beam pattern to each of the driver circuits 504, 504', which in their turn will provide the LC elements 200, 200' with analog drive currents so as to switch the LC elements 200, 200' between the first, non-refractive state and the second, refractive state, as described above in relation to Figs. 2 - 4.

As can be seen in Fig. 5, the light source 500 will emit light 509 that impinges on the first LC element 200, which will alter the distribution of the emitted light 509 in dependence on the instantaneous state (in this case the second or refractive state), thus producing a broader light beam 510. The broader light beam 510 will in its turn impinge on the second LC element 200', which will alter the direction of the broader light beam 510 in dependence on the instantaneous state (in this case the second or refractive state), thus producing a broader and tilted light beam 511. The broader and tilted light beam 511 is advantageously used to illuminate the road 101 with the town light beam pattern 104 of Fig. 1 c. As will be readily understood by those skilled in the art, it is possible to produce all of the light beam patterns illustrated in Figs. 1a - 1c with an AFS 500 according to the present invention. Furthermore, the use of control information provided by the steering wheel angle sensor 507 and/or positioning information in relation to a roadmap, a different LC element 200, and well-known prediction algorithms render it possible to alter the optical axis of the light beams, for example into a horizontal direction so as to provide road illumination in the direction of the road, for example when driving on a winding road.

The lamp unit, for example as illustrated above in Fig. 5, may additionally comprise a projection lens, wherein the beam shape to be projected on the road derives from an aperture (opening with a particular shape) placed in the focus of the projection lens. An example of such a lamp unit is illustrated in Fig. 6, wherein the light source is a single LED module 601 with a beam shaper 602, and wherein a projection lens 603 is positioned downstream of an optical switching element 604. The optical switching element 604 may comprise an LC element of any type described above in relation to Figs. 2-4. Furthermore, the projection lens should be positioned in close proximity to the optical switching element. Preferably, the optical switching element is in optical contact with the flat surface of the projection lens, as shown in Fig. 6. The lamp unit and the light source may be used, for example, to produce the light pattern 600.

Those skilled in the art will realize that the present invention is by no means limited to the preferred embodiments described above. On the contrary, many modifications and variations are possible within the scope of the appended claims. In a vehicle having two headlights with an AFS according to the present invention, for example, each headlight may be adapted to function independently of the other. Furthermore, it would also be possible to provide tail lights with the functionality according to the present invention.

## Claims

1. A lamp unit (501) with a light source (502) for an adaptive front lighting system (500) for a vehicle (100), the lamp unit comprising:
a first liquid crystal element (200/200') arranged to receive light emitted by the light source (502), which liquid crystal element (200/200') has a first state in which it is adapted to transmit incoming light without substantially refracting said incoming light, and a second state in which it is adapted to refract said incoming light when the light passes through said liquid crystal element (200/200'), wherein the liquid crystal element is controllable in dependence on a signal received from the adaptive front lighting system (500), **characterized in that** the lamp unit (501) further comprising at least a second liquid crystal element (200/200') arranged to receive light emitted by the first liquid crystal element (200/200'), wherein one of the first and the second liquid crystal elements (200/200') in said second state is adapted to alter the direction of said incoming light when it passes through that liquid crystal element (200), and the other one of the first and the second liquid crystal elements (200') in said second state is adapted to alter the distribution of said incoming light when it passes through that liquid crystal element.

2. A lamp unit (501) according to claim 1, wherein said liquid crystal element (200') comprises a surface relief structure (206, 206').

3. A lamp unit (501) according to claim 2, wherein said surface relief structure comprises a linear grating structure with at least one of triangular, rectangular, circular, and elliptical cross-sections.

4. A lamp unit according to claim 1, wherein said liquid crystal element is an anisotropically scattering element.

5. A lamp unit (501) according claim 1, wherein said liquid crystal element is a GRIN optical element, the GRIN optical element having a first and a second surface.

6. A lamp unit (501) according to any one of the preceding claims, wherein said liquid crystal element (200/200') comprises at least two electrodes (207/202) adapted to receive a voltage to switch the state of the liquid crystal element (200/200').

7. A lamp unit (501) according claim 5 and 6, wherein said GRIN optical element comprises linear electrodes on both said element surfaces for applying an electric field across said element.

8. A lamp unit (501) according claim 5 and 6, wherein said GRIN optical element comprises interdigitated comb electrodes on at least one of said element surfaces for applying an electric field across said element.

9. A lamp unit (501) according to any one of the preceding claims, wherein said light source (502) comprises one of the following: at least one LED, inorganic LED, high-intensity discharge lamp, and plasma lamp.

10. A lamp unit (501) according to any one of the preceding claims, further comprising a projection lens, which lens is preferably arranged in direct optical contact with said liquid crystal element.

11. An adaptive front lighting system (500) for a vehicle (100), comprising:
- a lamp unit (501) according to any one of the claims 1 to 10, and
- a control unit (503) adapted to apply a switching voltage to said liquid crystal element or elements (200/200').

12. An adaptive front lighting system (500) according claim 11, further comprising a sensor (506/507/508) for providing a signal indicating a state of said vehicle (100), wherein said control unit (503) is further adapted to receive said signal and to apply said switching voltage to said liquid crystal element(s) (200/200') in dependence on the received signal.

13. An adaptive front lighting system (500) according claim 12, wherein said sensor (506/507/508) is selected from a group comprising: a steering wheel angle sensor, a sensor for the speed of said vehicle, a road bend sensor, a radial force sensor, an incline sensor, a GPS-sensor, a light sensor, and a weather sensor.

14. A vehicle (100) comprising an adaptive front lighting system (500) according to any one of the claims 11 to 13.

## Patentansprüche

1. Lampeneinheit (501) mit einer Lichtquelle (502) für ein adaptives Frontbeleuchtungssystem (500) für ein Fahrzeug (100), wobei die Lampeneinheit umfasst:
- ein erstes Flüssigkristallelement (200/200'), welches angeordnet ist, um von der Lichtquelle (502) emittiertes Licht zu empfangen, wobei das Flüssigkristallelement (200/200') einen ersten Zustand, in dem es so eingerichtet ist, dass es ankommendes Licht überträgt, ohne dieses wesentlich zu brechen, und einen zweiten Zustand, in dem es so eingerichtet ist, dass es das ankommende Licht bricht, wenn das Licht durch das Flüssigkristallelement (200/200') hindurchgeht, aufweist, wobei das Flüssigkristallelement in Abhängigkeit eines von dem adaptiven Frontbeleuchtungssystem (500) empfangenen Signals steuerbar ist, **dadurch gekennzeichnet, dass** die Lampeneinheit (501) weiterhin zumindest ein zweites Flüssigkristallelement (200/200') umfasst, welches angeordnet ist, um von dem ersten Flüssigkristallelement (200/200') emittiertes Licht zu empfangen, wobei das erste oder das zweite Flüssigkristallelement (200/200') in dem zweiten Zustand so eingerichtet ist, dass es die Richtung des ankommenden Lichts ändert, wenn dieses durch das Flüssigkristallelement (200) hindurchgeht, und das andere erste oder zweite Flüssigkristallelement (200') in dem zweiten Zustand so eingerichtet ist, dass es die Verteilung des ankommenden Lichts ändert, wenn dieses durch das Flüssigkristallelement hindurchgeht.

2. Lampeneinheit (501) nach Anspruch 1, wobei das Flüssigkristallelement (200') eine Oberflächenreliefstruktur (206, 206') umfasst.

3. Lampeneinheit (501) nach Anspruch 2, wobei die Oberflächenreliefstruktur eine lineare Gitterstruktur mit zumindest einem dreieckigen, rechteckigen, kreisförmigen oder elliptischen Querschnitt umfasst.

4. Lampeneinheit (501) nach Anspruch 1, wobei das Flüssigkristallelement ein anisotrop streuendes Element ist.

5. Lampeneinheit (501) nach Anspruch 1, wobei das Flüssigkristallelement ein optisches GRIN-Element ist, wobei das optische GRIN-Element eine erste und eine zweite Oberfläche aufweist.

6. Lampeneinheit (501) nach einem der vorangegangenen Ansprüche, wobei das Flüssigkristallelement (200/200') mindestens zwei Elektroden (207/202) umfasst, die so eingerichtet sind, dass sie eine Spannung aufnehmen, um den Zustand des Flüssigkristallelements (200/200') umzuschalten.

7. Lampeneinheit (501) nach Anspruch 5 oder 6, wobei das optische GRIN-Element lineare Elektroden auf beiden Elementoberflächen umfasst, um an das Element ein elektrisches Feld anzulegen.

8. Lampeneinheit (501) nach Anspruch 5 oder 6, wobei das optische GRIN-Element ineinandergreifende Kammelektroden auf zumindest einer der Elementoberflächen umfasst, um an das Element ein elektrisches Feld anzulegen.

9. Lampeneinheit (501) nach einem der vorangegangenen Ansprüche, wobei die Lichtquelle (502) mindestens eine LED, eine anorganische LED, eine Hochdruckentladungslampe oder eine Plasmalampe umfasst.

10. Lampeneinheit (501) nach einem der vorangegangenen Ansprüche, die weiterhin eine Projektionslinse umfasst, welche vorzugsweise in direktem optischen Kontakt mit dem Flüssigkristallelement angeordnet ist.

11. Adaptives Frontbeleuchtungssystem (500) für ein Fahrzeug (100), mit:
- einer Lampeneinheit (501) nach einem der Ansprüche 1 bis 10 sowie
- einer Steuereinheit (503), die so eingerichtet ist, dass sie an das Flüssigkristallelement bzw. die Flüssigkristallelemente (200/200') eine Schaltspannung anlegt.

12. Adaptives Frontbeleuchtungssystem (500) nach Anspruch 1, welches weiterhin einen Sensor (506/507/508) umfasst, um ein Signal vorzusehen, welches einen Zustand des Fahrzeugs (100) zeigt, wobei die Steuereinheit (503) weiterhin so eingerichtet ist, dass sie das Signal empfängt und die Schaltspannung in Abhängigkeit des empfangenen Signals an das (die) Flüssigkristallelement(e) (200/200') anlegt.

13. Adaptives Frontbeleuchtungssystem (500) nach Anspruch 12, wobei der Sensor (506/507/508) aus einer Gruppe, umfassend einen Lenkradwinkelsensor, einen Sensor für die Geschwindigkeit des Fahrzeugs, einen Kurvensensor, einen Radialkraftsensor, einen Neigungssensor, einen GPS-Sensor, einen Lichtsensor und einen Wettersensor, ausgewählt wird.

14. Fahrzeug (100) mit einem adaptiven Frontbeleuchtungssystem (500) nach einem der Ansprüche 11 bis 13.

## Revendications

1. Unité de lampe (501) avec une source de lumière (502) pour un système d'éclairage avant adaptatif (500) pour un véhicule (100), l'unité de lampe comprenant :
- un premier élément à cristaux liquides (200/200') qui est agencé de manière à recevoir de la lumière qui est émise par la source de lumière (502), lequel élément à cristaux liquides (200/200') présente un premier état dans lequel il est adapté de manière à transmettre de la lumière entrante sans ne réfracter sensiblement ladite lumière entrante et un deuxième état dans lequel il est adapté de manière à réfracter ladite lumière entrante lorsque la lumière passe à travers ledit élément à cristaux liquides (200/200'), dans laquelle l'élément à cristaux liquides est contrôlable en fonction d'un signal qui est reçu du système d'éclairage avant adaptatif (500), **caractérisée en ce que** l'unité de lampe (501) comprend encore au moins un deuxième élément à cristaux liquides (200/200') qui est agencé de manière à recevoir de la lumière qui est émise par le premier élément à cristaux liquides (200/200'), dans laquelle l'un des premier et deuxième éléments à cristaux liquides (200/200') dans ledit deuxième état est adapté de manière à changer la direction de ladite lumière entrante lorsqu'elle passe à travers cet élément à cristaux liquides (200) et dans laquelle l'autre des premier et deuxième éléments à cristaux liquides (200') dans ledit deuxième état est adapté de manière à changer la distribution de ladite lumière entrante lorsqu'elle passe à travers cet élément à cristaux liquides.

2. Unité de lampe (501) selon la revendication 1, dans laquelle ledit élément à cristaux liquides (200') comprend une structure de surface en relief (206, 206').

3. Unité de lampe (501) selon la revendication 2, dans laquelle ladite structure de surface en relief comprend une structure de grille linéaire avec au moins une des coupes transversales triangulaires, rectangulaires, circulaires et elliptiques.

4. Unité de lampe selon la revendication 1, dans laquelle ledit élément à cristaux liquides est un élément de diffusion anisotrope.

5. Unité de lampe (501) selon la revendication 1, dans laquelle ledit élément à cristaux liquides est un élément optique GRIN, l'élément optique GRIN ayant une première et une deuxième surface.

6. Unité de lampe (501) selon l'une quelconque des revendications précédentes 1 à 5, dans laquelle ledit élément à cristaux liquides (200/200') comprend au moins deux électrodes (207/202) qui sont adaptées de manière à recevoir une tension pour commuter l'état de l'élément à cristaux liquides (200/200').

7. Unité de lampe (501) selon la revendication 5 ou selon la revendication 6, dans laquelle ledit élément optique GRIN comprend des électrodes linéaires sur les deux surfaces dudit élément pour appliquer un champ électrique à travers ledit élément.

8. Unité de lampe (501) selon la revendication 5 ou selon la revendication 6, dans laquelle ledit élément optique GRIN comprend des électrodes interdigitées en peigne sur au moins une des surfaces dudit élément pour appliquer un champ électrique à travers ledit élément.

9. Unité de lampe (501) selon l'une quelconque des revendications précédentes 1 à 8, dans laquelle ladite source de lumière (502) comprend une des pièces suivantes : au moins une diode électroluminescente, une diode électroluminescente inorganique, une lampe à décharge à haute intensité et une lampe à plasma.

10. Unité de lampe (501) selon l'une quelconque des revendications précédentes 1 à 9, comprenant encore une lentille de projection, laquelle lentille est de préférence agencée en contact optique direct avec ledit élément à cristaux liquides.

11. Système d'éclairage avant adaptatif (500) pour un véhicule (100), comprenant :
- une unité de lampe (501) selon l'une quelconque des revendications précédentes 1 à 10, et
- une unité de commande (503) qui est adaptée de manière à appliquer une tension de commutation audit(s) élément(s) à cristaux liquides (200/200').

12. Système d'éclairage avant adaptatif (500) selon la revendication 11, comprenant encore un capteur (506/507/508) pour fournir un signal qui indique un état dudit véhicule (100), dans lequel ladite unité de commande (503) est encore adaptée de manière à recevoir ledit signal et à appliquer ladite tension de commutation audit(s) élément(s) à cristaux liquides (200/200') en fonction du signal reçu.

13. Système d'éclairage avant adaptatif (500) selon la revendication 12, dans lequel ledit capteur (506/507/508) est sélectionné parmi un groupe comprenant : un capteur d'angle de volant de direction, un capteur pour la vitesse dudit véhicule, un capteur de virage de route, un capteur de force radiale, un capteur d'inclinaison, un capteur GPS, un capteur de lumière et un capteur météo.

14. Véhicule (100) comprenant un système d'éclairage avant adaptatif (500) selon l'une quelconque des revendications précédentes 11 à 13.
